Europäisches Patentamt

European Patent Office

Office européen des brevets

(11) Publication number: **0 176 672 B1**

# EUROPEAN PATENT SPECIFICATION

(45) Date of publication of patent specification: **11.03.92**  (51) Int. Cl.5: **G06F 15/68**

(21) Application number: **85108490.5**

(22) Date of filing: **09.07.85**

(54) **Method and system for line-thinning process with variable scanning areas.**

(30) Priority: **21.09.84 JP 197017/84**

(43) Date of publication of application:
**09.04.86 Bulletin 86/15**

(45) Publication of the grant of the patent:
**11.03.92 Bulletin 92/11**

(84) Designated Contracting States:
**DE FR GB**

(56) References cited:
**US-A- 3 940 737**

**PATENT ABSTRACTS OF JAPAN, vol. 7, no. 290 (P-245)[1435], 24th December 1983; & JP-A-58 163 078 (TOKYO SHIBAURA DENKI K.K.) 27-09-1983**

**SYSTEMS-COMPUTERS-CONTROLS, vol. 15, no. 6, November-December 1984, pages 36-43, Silver Spring, Maryland, US; A. NAKAYAMA et al.: "An efficient thinning algorithm for large-scale images based on pipeline structures"**

(73) Proprietor: **International Business Machines Corporation**
**Old Orchard Road**
**Armonk, N.Y. 10504(US)**

(72) Inventor: **Sakaue, Yoshinori**
**3-35-10 Nishigahara**
**Kita-ku Tokyo(JP)**
Inventor: **Sugimoto, Kazutoshi**
**31-12-712 Hon-cho**
**Wakoh-shi Saitama-ken(JP)**

(74) Representative: **Jost, Ottokarl, Dipl.-Ing.**
**Schönaicher Strasse 220**
**W-7030 Böblingen(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to line-thinning process of picture, and more particularly to a method and system for high speed line-thinning allowing minimum scanning.

The line-thinning is a technique frequently used as a preprocess for image processing, and various line-thinning processes are developed up to now. Tamura: "Comparative study of line-thinning schemes," Material of IP Study Group of Information Processing Society of Japan (1975 - 06) and Tamura: "Studies of line-thinning schemes," Material of PRL Study Group of the Institute of Electronics and Communication Engineers of Japan, PRL 75 - 66 compare and study line-thinning process.

Sequential line-thinning processes are indicated in, for example, the following material:

J. Hilditch: "Linear skeleton from square cupboards," In Machine Intelligence IV, B. Meltzer & D. Michie, Eds. University Press, Edinburgh, pp. 403 - 420 (1969)

E.S. Duetsch: "Computer simulation of a character-recognition machine, part 1," The Post Office Electrical Engineers J. 60, pp. 39 - 44 (April, 1967); and

Yokoi et al.: "An analysis of topological features at digitized binary pictures using local features," CG & IP, Vol. 4, No. 1, pp. 63 - 73 (March, 1975).

Parallel line-thinning processes are indicated in, for example, the following material:

D. Rutoritz: "Pattern recognition," J. Royal Statist. Soc. 129, Series A, pp. 504 - 430 (1966); and

Tamura & Mori: "Algorism and connectivity of parallel line-thinning of binary figures," National Communication Conference in 1974, No. 1539, p. 1390.

A line-thinning method that processes a picture by segmenting into a plurality of rectangular areas is disclosed in Japanese Laid-open Patent Specification No. 163078/83.

The conventional line-thinning process has the following problems.

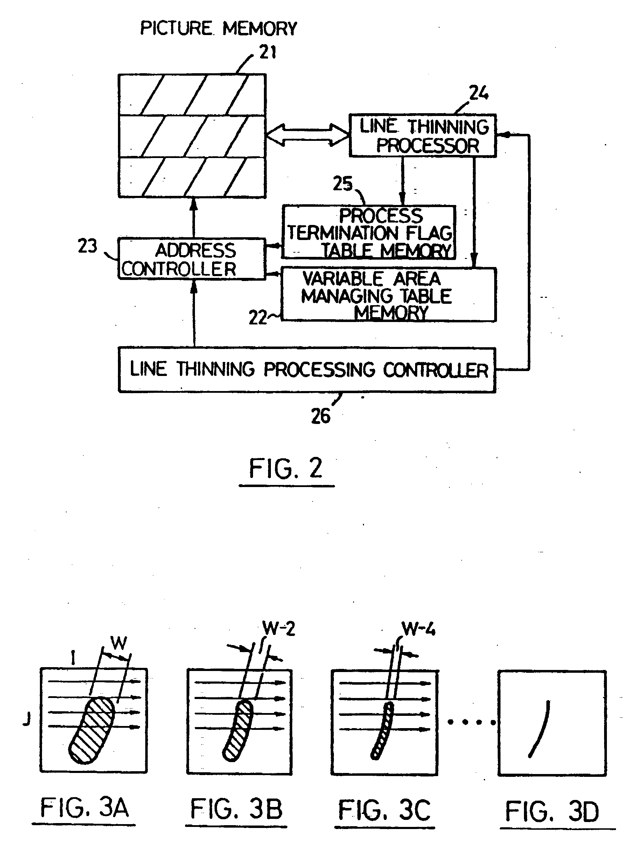

As shown in the line-thinning process of Hilditch, since one scanning for entire picture reduces width of lines in a picture by one pixel from each side, number of scanning to be repeated for the entire picture is about W/2 where W is maximum line width contained in the picture. This is shown in Figures 3A - 3D. In this case, number of scanning points P required for line-thinning is:

$$P \simeq S \times \frac{W}{2} \qquad\qquad (1)$$

where

$S$ : number of scanning points in entire picture ($I \times J$)

$\frac{W}{2}$ : repeated number of scanning for entire picture

$W$ : maximum line width in entire picture

Therefore, if there is even an area with a thick line or a solid black area in the picture, it is required to repeatedly scan the entire picture only because of such area, which, in turn, causes to take enormous processing time.

Thus, to reduce the processing time, Japanese Laid-open Patent Specification No. 163078/83 intends to increase speed of line-thinning by segmenting the picture into a plurality of rectangular areas so as to complete the processing for the segmented areas without thick line quickly, and to repeatedly scan the segmented areas with thick line.

However, there still remains a problem such that many unnecessary scanning is performed because, even in such segmented areas, ratio of lines in an area is often only several percent.

In addition, in the sequential line-thinning as Hilditch when the segmentation into rectangular areas is employed, the connectivity at a boundary is not assured, and a particular processing must be added for the boundary. This makes the line-thinning complicated and cumbersome to take much time.

It is an object of the invention to provide a method and a system for high speed line-thinning that can minimize the number of scanning.

To materialize such high speed line-thinning, the method as set out in Claim 1 is proposed.

Thus, the invention reduces and controls dynamically the area to be scanned. It is because the incomplete area becomes more and more small as the scanning is repeated, so that the area variably determined according to the incomplete area also becomes smaller. The condition to terminate all processes for line-thinning is when it is determined that the line-thinning is completed for all sections after checking all of them.

In case where the invention applies to the sequential line-thinning, the connectivity of lines can be easily assured by arranging the boundary between each sections in a stepwise manner.

2

The disclosed high speed line-thinning method is embodied in a high speed line-thinning system as set out in Claim 3.

Figure 1                is a flowchart showing an embodiment of the line-thinning method according to the invention.

Figure 2                is a block diagram showing an embodiment of a line-thinning system according to the invention.

Figures 3A to 3D        are drawings showing changes of line width in the line-thinning.

Figures 4A to 4C        are drawings showing changes of scanning areas in repeat scanning.

Figure 5                is a drawing showing a type of division.

Figure 6                is a drawing showing scanning of a mask.

Figure 7                is a drawing showing an area from which points are removed.

Figure 8                is a graph showing line-thinning processing time for a case where a picture is merely divided, and for a case where a picture is divided and areas to be repeatedly scanned are dynamically reduced and controlled.

Figure 9A               is a drawing showing the picture at starting of the scanning.

Figure 9B               is a drawing showing the picture during point scanning.

Figure 10A              is a drawing showing the condition of 8-neighbor in a section.

Figure 10B              is a drawing showing the condition of 8-neighbor at a section boundary.

Figure 11               is a drawing showing the condition of 8-neighbor at a stepwise section boundary.

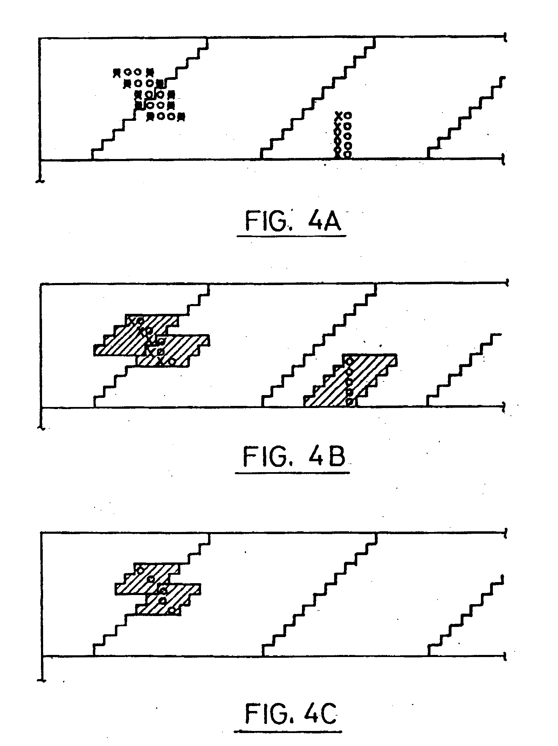

Now, to understand the high speed line-thinning method according to the invention, an embodiment in which the method applies to the sequential line-thinning is described referring to Figures 4A to 4C.

In the embodiment, a picture is divided to have stepwise boundaries, which is because it exemplifies a case where the high speed line-thinning method of the invention is embodied in a combination with a method dividing a picture into sections with stepwise boundaries to easily assure the connectivity in the sequential line-thinning.

Now, as shown in Figure 4A, when first line-thinning scanning is performed for each sections that are obtained by dividing a picture to be processed, it causes point removal positions marked with X and incomplete areas of line-thinning marked with O. These incomplete areas can be extracted or defined basing on the point removal positions. Thus, the incomplete areas are extracted. The first scanning is performed for entire section so as to prevent miss scanning.

Then, as shown in Figure 4B, second line-thinning scanning is performed for shadowed areas that are variably determined to be smaller than the section according to the incomplete areas extracted in the first scanning so that they contain these incomplete areas. Although the shadowed areas have shapes corresponding to the stepwise boundaries of the sections, they may have any other shape because the stepwise boundaries are merely caused by the processing program. The first and second sections causes the point removal positions marked with X and the incomplete areas marked with O even in the second scanning. Since the point is not removed from the third section in the second scanning, the O marks do not indicate the incomplete area any more. Therefore, the line-thinning is completed for the third section.

Then, as shown in Figure 4C, similarly third line-thinning scanning is performed for the first and second sections. Since the incomplete areas extracted in the second scanning are smaller than those extracted in the first scanning, areas to be scanned by the third scanning become further smaller than those by the second scanning. In fact, shadowed areas in Figure 4C are smaller than those in Figure 4B. Because any point is not removed from both sections in the third scanning, the line-thinning is completed for these sections.

Similarly, the line-thinning continues for sections with incomplete areas until the point removal is not performed any more.

As clearly seen from the foregoing, the high speed line-thinning method according to the invention attains minimum scanning in the line-thinning process.

Now, a block diagram of a system embodying the invention is shown in Figure 2.

A picture memory 21 with a size of I x J is divided into sections of, for example, m x n with stepwise boundaries. A variable area managing table memory 22 manages information of line-thinning processing areas for each sections. Basing on the information of the table memory 22, an address controller 23 assigns an address for areas for which line-thinning conditions are judged. Picture information of the areas are supplied to a line-thinning processor 24. The processor 24 judges whether or not point are removed, writes in a process termination flag table memory 25 information on whether or not further point removal is required, and, if points are removed, detects their positions, which are written into the variable area managing table memory 22. The address controller 23 operates according to an address managed by the variable area managing table memory 22 to continue the line-thinning process until the process termination flag on the section becomes 1. The line-thinning is not performed for areas for which the process termination flag becomes 1. When the process termination flag becomes 1 for all sections, the process is terminated. Timing between the address controller 23 and the line-thinning processor 24 is controlled by the line-thinning processing controller 26.

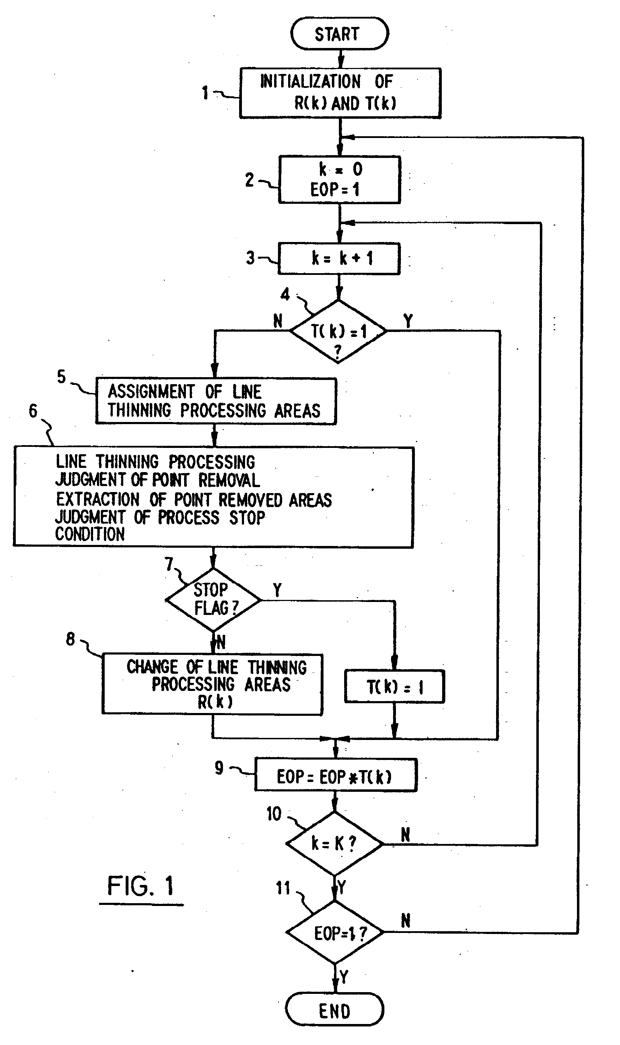

Such flow of line-thinning is described by referring to Figure 1.

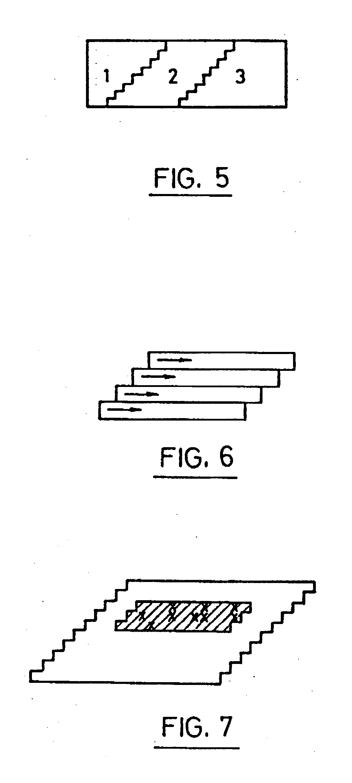

Step (1) initializes the area managing table R (k) and the process stop flag table T (k). k is the number of sections. The area managing table R(k) contains information on a start address, size and boundary informations of areas to be sent to the line-thinning processor 24. In case where the boundaries of sections is formed stepwise, it also contains information on a type of process for making the process for the left and right ends of a section smooth (see Figure 5). The process stop flag table T (k) is set at 0.

Step (2) sets k to 0 to execute the process from the first area. Also, it sets a line-thinning process termination flag EOP at 1 that indicates whether or not all sections satisfy the stop condition.

Step (3) sets k to k + 1 so that the process can transfer to the next area.

Step (4) checks whether or not the stop condition is satisfied for areas to be processed. If it is satisfied, the process skips to Step (9) without performing repeat scanning.

Step (5) assigns the line-thinning processing areas. It is attained by using the area managing table R (k).

Step (6) performs the line-thinning process. In case where the sequential line-thinning is employed, the point removal condition and the process stop condition are determined by scanning a mask of 3 x 3. The scanning of the mask is performed within the stepwise boundaries of sections (see Figure 6). Areas from which the points are removed are detected by determining the first and last lines and the first and last columns from which the points are removed in the scanning (see Figure 7). In Figure 7, X indicates a point removal position, while a shadowed area indicates an area from which the points are removed.

Step (7) judges the process stop flag. If it satisfies the process stop condition, T (k) is set at 1.

Step (8) changes the line-thinning process area. If it does not satisfies the process stop condition, an area from which the points detected during the point scanning are removed is set as an area for the next repeat scanning. The area managing table R (k) is rewritten at this moment.

Step (9) performs AND operation for the line-thinning termination flag EOP and the process stop flag T (k).

Step (10) judges whether or not the scanning for the entire picture is completed. If the scanning for the entire picture is not completed, the process returns to Step (3).

Step (11) checks the line-thinning termination flag EOP. If the stop condition is satisfied for all sections, the line-thinning is terminated at that moment.

The following shows that the time for line-thinning can be reduced by dynamically reducing and controlling areas for repeat scanning.

When the picture is not divided at all, as shown in the equation (1), the number of scanning points required for the line-thinning P1 is:

$$P1 = S \times \frac{W}{2} \qquad (2)$$

When the picture is divided into K, because the number of repeat scanning required for line-thinning each section is determined by the maximum line width in the section, the number of scanning points required for the line-thinning is:

$$P2 = \sum_{k=1}^{K} s_k \times \frac{w_k}{2} \qquad (3)$$

where

EP 0 176 672 B1

$s_k$ : size of section (k)

$\dfrac{w_k}{2}$ : number of repeat scanning for section (k)

$w_k$ : maximum line width in section (k)

Since there is a relationship of $0 \leq w_k \leq W$ between W and $W_k$, P2 is not affected by the maximum line width in the entire picture, and the number of scanning points is reduced in comparison to a case where the picture is not divided.

When it is intended to make the object of repeat scanning into a dynamically reducing variable area including incomplete areas of line-thinning in addition to division of the picture, the number of scanning points required for line-thinning is:

$$P3 = \sum_{k=1}^{K} \sum_{n=1}^{w_k/2} s_{kn} \qquad (4)$$

where
$s_{kn}$ : size of incomplete area in each repeat scanning (n)

If the size of scanning area does not change for each repeat scanning, P3 becomes equal to P2. However, since generally, in many cases, lines contained in the section occupie only several percent of the section, $P3 \leq P2$. Thus, the following relation is established:

$$P3 \leq P2 \leq P1 \qquad (5)$$

By making the object of repeat scanning into a dynamically reducing and varying area containing the incomplete areas of line-thinning as described, it becomes possible to reduce the number of scanning points for line-thinning and to shorten the processing time.

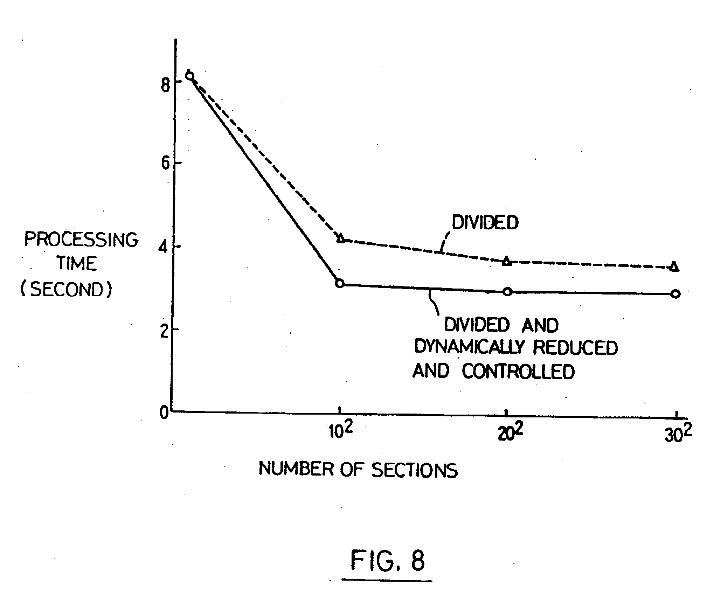

Therefore, this invention allows to significantly shorten time for line-thinning. In fact, when the processing time was investigated for a map that was a complicated picture, the processing time could be reduced by 20 %, as shown in Figure 8, in a case where the picture was divided and the areas to be repeatedly scanned was dynamically reduced and controlled (solid line), than a case where the picture was only divided (broken line). There arose no overhead in either case.

Now the advantage obtained by dividing the picture stepwisely is described.

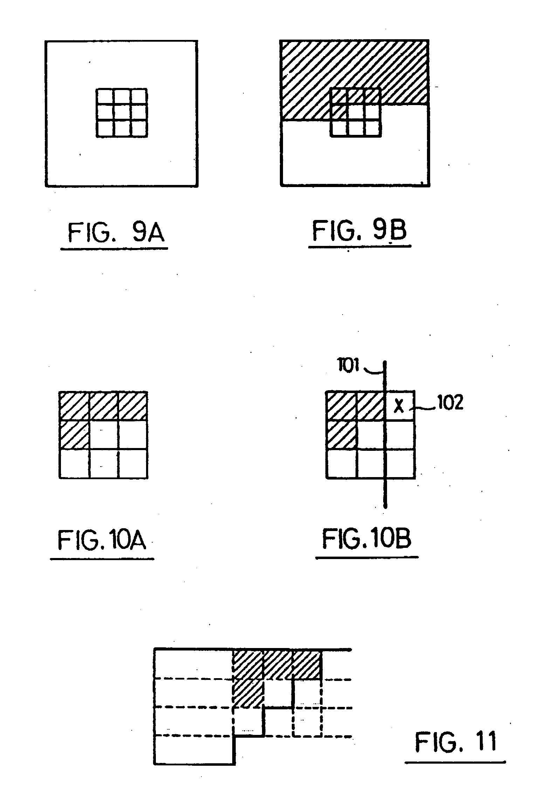

In the sequential line-thinning as by Hilditch, the picture is scanned by a mask of 3 x 3 (pixels) to determine with the condition of 8-neighbor whether or not a point of the object of scanning (center of the mask) is removed. In this case, the condition of 8-neighbor is determined from both conditions of the picture at starting the scanning and the picture during scanning for each point (see Figures 9A and 9B). Figure 9A is for a picture of an original picture or at starting of repeat scanning, while Figure 9B is for a picture during scanning of points for consideration of point removal during the point scanning, shadowed areas in which are those already scanned.

Since four neighbor points must be already scanned as shadowed areas in Figure 10A for the condition of 8-neighbor during the point scanning, a non-processed area 102 is caused at the section boundary 101 as shown in Figure 10B if the picture is simply divided in the horizontal and vertical directions. Thus, if the picture is divided stepwisely as shown in Figure 11, the non-processed area 102 becomes a scanned area. This allows to perform exactly same processing as that in a case where no division is performed, and assures the continuity of lines. In addition, it can improve the line-thinning processing time because there is no need for useless overlapping in the section of picture for assuring the continuity of lines.

In case where the picture is divided into rectangles without stepwise boundary, the line-thinning processing is provided for areas with overlapping of several pixels, and additional processing is performed for the boundary in order to assure the continuity of lines. In this case, it is required to prepare a separate buffer for the line-thinning into which data are transferred before the line-thinning processing. This causes very large overhead because of the division of picture, which, in turn, eliminates the advantage of division.

5

EP 0 176 672 B1

On the other hand, in case where the picture is stepwisely divided, it is possible to improve the processing time because addresses in a buffer for an original picture can be directly specified without use of such separate buffer.

**Claims**

1. A method performed in an image apparatus for thinning a line in a picture with variable scanning areas said picture being divided into a plurality of adjacent sections, performing scanning necessary for line-thinning on the basis of said sections; said method being characterized by the following steps:
in a first pass extracting for each section, based on positions where points of said line have been removed, incomplete areas that require further line thinning and
in further scanning passes for thinning said line, scanning variable areas in all sections where points have been removed during the last scanning pass, said variable areas having sizes smaller than those of said sections and being variably determined to enclose said incomplete areas.

2. A method as claimed in claim 1, wherein said picture is divided into a plurality of sections whose boundaries take the form of steps.

3. A system for thinning a line in a picture with variable scanning areas, said picture being divided into a plurality of adjacent sections, said system comprising: storage means (21) for storing information on said picture, processing area managing means (22) for managing information on a line-thinning processing area in each of the sections into which said picture is divided, access controlling means (23), line-thinning processing means (24) and process terminating means (24), characterized in that
said access controlling means (23) receives information contained in said processing area managing means (22), and enables access to the picture information on said line-thinning processing area in said storage means (21);
said line-thinning processing means (24) receives said accessed picture information to determine for each said line-thinning processing area whether or not points of said line have to be removed, outputting the result of said decision, and at the same time, if the points are removed, detecting positions of point removal for determining a new and smaller line-thinning processing area, enclosing said positions, for further line-thinning passes and providing information on said new area to said processing area managing means;
said processing terminating control means controls operation of said access controlling means (23) by receiving said decision whether or not further point removal is required; and
a line-thinning processing control means (26) is provided for controlling timing of said access controlling means (23) and said line-thinning processing means (24).

**Revendications**

1. Procédé pour accomplir, dans un dispositif d'image, l'amincissement de traits dans une image avec des régions de balayage variables, ladite image étant divisée en une pluralité de sections adjacentes pour accomplir le balayage nécessaire à l'amincissement des traits sur la base desdites sections, ledit procédé étant caractérisé par les étapes suivantes:
dans un premier passage, extraire pour chaque section, sur la base de positions où des points desdits traits ont été éliminés, des régions incomplètes qui exigent un autre amincissement de traits, et
dans d'autres passages de balayage pour l'amincissement desdits traits, des régions de balayage variables dans toutes les sections où ont été éliminés des points durant le dernier passage du balayage, lesdites régions variables ayant des dimensions plus petites que celles desdites sections et étant déterminées de façon variable pour englober lesdites régions incomplètes.

2. Procédé selon la revendication 1, dans lequel ladite image est divisée en une pluralité de sections dont les limites prennent la forme de gradins.

3. Système d'amincissement de traits dans une image avec des régions de balayage variables, ladite image étant divisée en une pluralité de sections adjacentes, ledit système comprenant des moyens d'emmagasinage (21) pour emmagasiner des informations sur ladite image, des moyens de gestion de

6

région de traitement (22) pour gérer les informations relatives à la région de traitement d'amincissement de traits dans chacune des sections dans lesquelles est divisée ladite image, des moyens de contrôle d'accès (23), des moyens de traitement d'amincissement de traits (24) et des moyens de terminaison du procédé 24),

caractérisé en ce que:

lesdits moyens de contrôle d'accès (23) reçoivent les informations contenues dans lesdits moyens de gestion de région de traitement (22) et permettent l'accès aux informations d'image relatives à ladite région de traitement d'amincissement de traits dans lesdits moyens d'emmagasinage (21),

lesdits moyens de traitement d'amincissement de traits (24) reçoivent lesdites informations d'image auxquelles il y a eu accès afin de déterminer, pour chacune desdites régions de traitement d'amincissement de traits, si des points desdits traits doivent ou non être éliminés, envoyant le résultat de ladite décision et, en même temps, si les points sont éliminés, détectant les positions des points éliminés pour déterminer une nouvelle et plus petite région de traitement d'amincissement de traits englobant lesdites positions pour fournir des informations relatives à ladite nouvelle région auxdits moyens de gestion de région de traitement,

lesdits moyens de contrôle de terminaison du traitement contrôlent l'opération desdits moyens de contrôle d'accès (23) en recevant ladite décision quant au besoin ou non d'éliminer d'autres points, et

des moyens de contrôle du traitement d'amincissement de traits (26) sont fournis pour contrôler la synchronisation desdits moyens de contrôle d'accès (23) et desdits moyens de traitement d'amincissement de traits (24).

## Patentansprüche

1. Verfahren zur Durchführung in einem Bildgerät zur Ausdünnung einer Linie in einem Bild mit variablen Abtastbereichen, wobei das Bild in eine Anzahl zusammenhängender Abschnitte unterteilt ist und die Abtastung, die für die Linienausdünnung notwendig ist, auf Abschnittsbasis erfolgt, gekennzeichnet durch folgende Verfahrensschritte:

in einem ersten Durchlauf werden für jeden Abschnitt, basierend auf Stellen wo Punkte einer Linie entfernt wurden, unvollständige Bereiche, die einer weiteren Linienausdünnung bedürfen, extrahiert und in weiteren Abtastdurchläufen für die Ausdünnung der genannten Linie werden variable Bereiche in allen Abschnitten abgetastet, in denen Punkte während des letzten Abtastdurchlaufes entfernt wurden, wobei die variablen Bereiche von geringerer Größe sind als diejenigen der genannten Abschnitte und variabel bestimmt werden, um die unvollständigen Bereiche zu umschließen.

2. Verfahren nach Anspruch 1,
dadurch gekennzeichnet, daß
das Bild in eine Anzahl von Abschnitten unterteilt wird, deren Grenzen stufenförmig sind.

3. Einrichtung zur Ausdünnung einer Linie in einem Bild mit variablen Abtastbereichen, wobei das Bild in eine Anzahl von zusammenhängenden Abschnitten unterteilt ist, mit einem Speicher (21) zur Speicherung von Bildinformation, mit einem Verarbeitungsbereichsmanager (22) zum Informationsmanagment hinsichtlich eines Linienausdünnungs-Verarbeitungsbereichs in jedem der Abschnitte, in welche das Bild unterteilt ist, mit einer Zugriffssteuerung (23) mit einer Linienausdünnungs-Verarbeitungseinheit (24) und einer Verarbeitungsbeendigungseinheit (24), dadurch gekennzeichnet, daß

die Zugriffssteuerung (23) Information empfängt, die in dem genannten Verarbeitungsbereichsmanager (22) enthalten ist und einen Zugriff auf die im genannten Speicher (21) enthaltene Bildinformation hinsichtlich des genannten Linienausdünnungs-Verarbeitungsbereiches ermöglicht,

die genannte Linienausdünnungs-Verarbeitungseinheit (24) die abgerufene Bildinformation empfängt, um für jeden Linienausdünnungs-Verarbeitungsbereich zu bestimmen ob Punkte der genannten Linie entfernt werden müssen oder nicht, wobei das Ergebnis dieser Entscheidung ausgegeben wird, und wobei gleichzeitig, wenn Punkte entfernt wurden, die Positionen der entfernten Punkte festgestellt werden, um einen neuen und kleineren Linienausdünnungs-Verarbeitungsbereich zu bestimmen, der die genannten Positionen umschließt für weitere Linienausdünnungsdurchläufe und, wobei die Information bezüglich des genannten neuen Bereichs dem Verarbeitungsbereichsmanager zugeführt wird,

daß ferner die Bearbeitungsbeendigungseinheit (24) den Betrieb der genannten Zugriffsteuerung (23) mittels des Empfangs der genannten Entscheidung, ob eine Punkteentfernung notwendig ist oder nicht, steuert und

daß eine Linienausdünnungs-Verarbeitungssteuerung (26) für die Steuerung des zeitlichen Ablaufs der Zugriffssteuerung (23) und der Leitungsausdünnungs-Verarbeitungseinheit (24) vorgesehen ist.

FIG. 1

PICTURE MEMORY

FIG. 2

FIG. 3A   FIG. 3B   FIG. 3C   FIG. 3D

FIG. 4A

FIG. 4B

FIG. 4C

FIG. 5

FIG. 6

FIG. 7

FIG. 8

FIG. 9A

FIG. 9B

FIG.10A

FIG.10B

FIG. 11